# EUROPEAN PATENT APPLICATION

(11) **EP 3 678 371 A1**
(43) Date of publication of application: **08.07.2020**
(21) Application number: 18861699.9
(22) Date of filing: 19.09.2018
(51) Int. Cl.: H04N 19/10, H04N 21/81, H04N 19/597, H04N 19/70

(54) **MEDIA INFORMATION PROCESSING METHOD AND APPARATUS**

(30) Priority: 29.09.2017 CN 201710903553
(71) Applicant: Huawei Technologies Co., Ltd., Longgang District Shenzhen, Guangdong 518129 (CN)
(72) Inventor: SONG, Yi, Shenzhen Guangdong 518129 (CN); XIE, Qingpeng, Shenzhen Guangdong 518129 (CN); FANG, Huameng, Shenzhen Guangdong 518129 (CN); FAN, Yuqun, Shenzhen Guangdong 518129 (CN)
(74) Representative: Pfenning, Meinig & Partner mbB
(86) International application number: PCT/CN2018/106430
(87) International publication number: WO 2019/062613

(57) **Abstract**

Embodiments of the present invention disclose a media information processing method and apparatus. The method includes: obtaining media data, where the media data includes indication information and at least one frame of picture data, the indication information is used to indicate whether a prediction pixel corresponding to a pixel in a picture exceeds a boundary in a preset direction, and the preset direction includes at least one of the following directions: a top direction, a bottom direction, a left direction, or a right direction; and decoding the at least one frame of picture data based on the indication information. According to the media information processing method and apparatus in the embodiments of the present invention, it is possible to splice a plurality of sub-bitstreams, required bitstreams are spliced and then are decoded, so that a plurality of sub-picture sequences can be decoded by using only a single decoder.

## Description

This application claims priority to Chinese Patent Application No. 201710903553.1, filed with the Chinese Patent Office on September 29, 2017 and entitled "MEDIA INFORMATION PROCESSING METHOD AND APPARATUS", which is incorporated herein by reference in its entirety.

### TECHNICAL FIELD

The present invention relates to the field of streaming media transmission technologies, and in particular, to a media information processing method and apparatus.

### BACKGROUND

Currently, with increasing popularity of applications for viewing a VR video such as a 360-degree video, a growing number of users participate in a team of experiencing VR video viewing in a large field of view. This new video viewing application brings a new technical challenge while bringing a new video viewing mode and new visual experience to the users. In a process of viewing a video in a large field of view such as a 360-degree field of view (where the 360-degree is used as an example for description in the embodiments of the present invention), a spatial region (where the spatial region may also be referred to as a spatial object) of a VR video is 360-degree panoramic space (or referred to as omnidirectional space or a panoramic spatial object), and exceeds a normal visual range of human eyes. Therefore, when viewing the video, a user changes a viewing angle (namely, a field of view, FOV) at any time. The user sees different video pictures with different fields of view. Therefore, content presented in the video needs to change with the field of view of the user.

In a current video application scenario, especially in a current 360-degree panoramic video application and multi-channel video application, sometimes a user is interested only in a part of an entire picture. In this case, a client does not need to display all picture regions, but needs only to obtain a part of the entire picture to render and present the part of the entire picture on the client. For example, in some applications of 360-degree panoramic video data, when a user views a part of a picture corresponding to a field of view of the user, a part of the picture in another region in the video does not need to be rendered and presented for the user. For another example, in a multi-channel video application scenario, a plurality of pictures are spliced into a video image, and when a user is interested only in a picture or some pictures, another picture does not need to be displayed. For this application scenario, an implementation is as follows: Each sub-picture sequence (where for a 360-degree panoramic video, an entire picture is first divided into sub-pictures) is encoded on a server side, then required bitstreams of sub-picture sequences are delivered to a client based on behavior of the client, then the bitstreams of the sub-picture are separately decoded, and pictures obtained after decoding are spliced and presented.

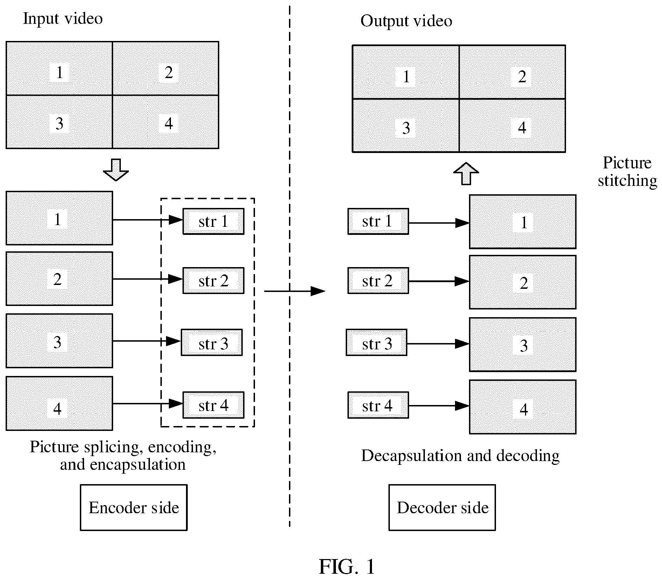

In an implementation solution that is based on sub-picture coding in the prior art, on an encoder side, a complete picture is cut into N sub-pictures, the N sub-pictures are encoded in parallel in real time by using a plurality of processors or a plurality of processor cores, and encoding results of the N sub-pictures and information that indicates a relative location relationship between the N sub-pictures are encapsulated together; and on an decoder side, encapsulated data including the N sub-pictures are decapsulated, where the encapsulated data includes the information that indicates a relative location relationship between the N sub-pictures, then the N sub-pictures are decoded in parallel in real time by using a plurality of processors or a plurality of processor cores, and finally, decoding results of the N sub-pictures are spliced into a complete picture again. An entire process is shown in FIG. 1. In this technology, a plurality of decoders need to be used on the decoder side to perform parallel decoding, and a requirement for decoding resources is relatively high.

### SUMMARY

Embodiments of the present invention provide a media information processing method and apparatus, where information about whether a prediction reference pixel for picture coding exceeds a boundary is added to a bitstream, so that it is possible to splice a plurality of bitstreams. Required bitstreams are spliced and then are decoded, so that a plurality of picture sequences can be decoded by using only a single decoder, thereby avoiding a resource waste problem when a plurality of decoders are used to decode a plurality of bitstreams in a conventional solution.

In an embodiment according to a first aspect of the present invention, a media information processing method is disclosed. The method includes:
obtaining media data, where the media data includes indication information and at least one frame of picture data, the indication information is used to indicate whether a prediction pixel corresponding to a pixel in a picture exceeds a boundary in a preset direction, and
the preset direction includes at least one of the following directions:
   a top direction, a bottom direction, a left direction, or a right direction; and
   decoding the at least one frame of picture data based on the indication information.

The method embodiment of the present invention may be performed by a device that has a video or picture decoding function, for example, a wearable device (such as an AR/VR helmet or AR/VR glasses), a server, an intelligent terminal (such as a mobile phone or a tablet computer), a television, or a set-top box.

In a possible implementation, a media data obtaining request is sent, and then the media data is received. For example, a client may construct a uniform resource locator (Uniform Resource Locator, URL) by using a related attribute and address information in a media presentation description file, then send an HTTP request to the URL, and receive corresponding media data.

In a possible implementation, the media data may be obtained in a push manner.

The media data in this embodiment of the present invention mainly refers to data obtained after encoding and encapsulation are performed on a video or a picture. In some possible implementations, the media data in this embodiment of the present invention may alternatively be data obtained after encoding and encapsulation are performed on audio. The video includes a series of pictures.

In a possible implementation, for a related example of the media data, refer to related regulations of media data in the ISO/IEC 23090-2 standard specification.

The ISO/IEC 23090-2 standard specification is also referred to as the OMAF (Omnidirectional media format, omnidirectional media format) standard specification. The specification defines a media application format that can implement presentation of omnidirectional media in an application. The omnidirectional media mainly refers to omnidirectional videos (360° video) and associated audio. The OMAF specification first specifies a list of projection methods that can be used to convert a spherical video into a two-dimensional video, followed by how to use an ISO base media file format (ISO base media file format, ISOBMFF) to store the omnidirectional media and metadata associated with the media, and how to encapsulate and transmit data of the omnidirectional media in a streaming media system, for example, by using dynamic adaptive streaming over hypertext transfer protocol (HyperText Transfer Protocol, HTTP) (Dynamic Adaptive Streaming over HTTP, DASH) or dynamic adaptive streaming specified in the ISO/IEC 23009-1 standard.

In a possible implementation, the picture in this embodiment of the present invention may be a complete picture collected by a collection device (such as a camera), or may be a picture obtained after a complete picture is divided. For example, a picture collected by the collection device is of 256^{∗}256 pixels. Therefore, the picture in this embodiment of the present invention may be a picture of 256^{∗}256 pixels, or may be a picture of 64^{∗}16 pixels, or may be a picture of 64^{∗}64 pixels.

In a possible implementation, the picture data described in this embodiment of the present invention is data obtained after the picture is encoded based on a video encoding technology, for example, may be picture data obtained after the picture is encoded by using the ITU H.264, or picture data obtained after the picture is encoded by using the ITU H.265, or may be data obtained after the picture is encoded by using another standard or private technology.

In a possible implementation, the indication information and the picture data in this embodiment of the present invention may be encapsulated in one file, or the indication information and the picture data may be encapsulated in different files.

In a possible implementation, the indication information and the picture data in this embodiment of the present invention may be separately obtained from different sources. For example, the indication information is obtained from a server A, and the picture data is obtained from a server B. Alternatively, the indication information and the picture data may be obtained from a same source but by separately using different requests or bitstreams. Alternatively, the indication information and the picture data may be obtained from a same bitstream.

The indication information may be encapsulated in a media presentation description (Media presentation description, MPD) file. The media presentation description file is a file that includes some metadata of the picture. The metadata refers to some attribute information, for example, duration, a bit rate, a frame rate, and a location in a spherical coordinate system.

In an example, the media presentation description file may refer to related regulations and examples in the ISO/IEC 23009-1.

In an example, the picture data is picture data obtained after the picture is encoded by using the ITU H.264, and the indication information may be encapsulated in supplemental enhancement information (supplementary enhancement information, SEI).

In an example, the picture data is picture data obtained after the picture is encoded by using the ITU H.265, and the indication information may be encapsulated in supplemental enhancement information (supplementary enhancement information, SEI).

In an example, the picture data is encapsulated in a track (track), and the indication information is encapsulated in a box (box) of the track.

In an example, the picture data may be picture data obtained after encoding is performed by using the ITU H.264/H.265 or another private standard. The picture data may alternatively be encapsulated in a track, and the indication information is encapsulated in a media presentation description (Media presentation description, MPD) file.

In a possible implementation, the indication information includes at least one identifier, and the identifier has a one-to-one correspondence with the preset direction. For example, the indication information may be a bit of flag, and indicates, based on a value of the flag, whether a boundary in the preset direction is exceeded. The indication information may alternatively be an indicator, and indicates, based on a value of the indicator, whether a boundary in the preset direction is exceeded. Different values of a same flag or indicator may be used to indicate different out-of-boundary directions. In this case, an independent flag or indicator may be required to indicate whether a boundary is exceeded, or different values of the same indicator may separately correspond to whether a boundary is exceeded and an out-of-boundary direction. Different flags or indicators may alternatively be used to indicate different out-of-boundary directions. In this case, a value of a same flag or indicator may indicate whether a boundary is exceeded. That a boundary is exceeded means that a boundary in the preset direction is exceeded.

In a possible implementation, the boundary indicated by the indication information in a bitstream in this embodiment of the present invention refers to a boundary of a picture obtained by decoding the bitstream. It may be understood that, in this embodiment of the present invention, when bitstreams are spliced, it is not required that pictures in the bitstreams are completely decoded and presented, and some decoding operations may only be performed.

In a possible implementation, the prediction pixel corresponding to the pixel in this embodiment of the present invention may be a pixel that is referenced when predictive coding is performed according to an intra prediction mode or an inter prediction mode.

In a possible implementation, the preset direction in this embodiment of the present invention includes at least one of the following directions: the top direction, the bottom direction, the left direction, or the right direction. The preset direction in this embodiment of the present invention may be a direction obtained by combining the foregoing four directions, for example, an upper left direction, a lower right direction, a lower left direction, or an upper right direction.

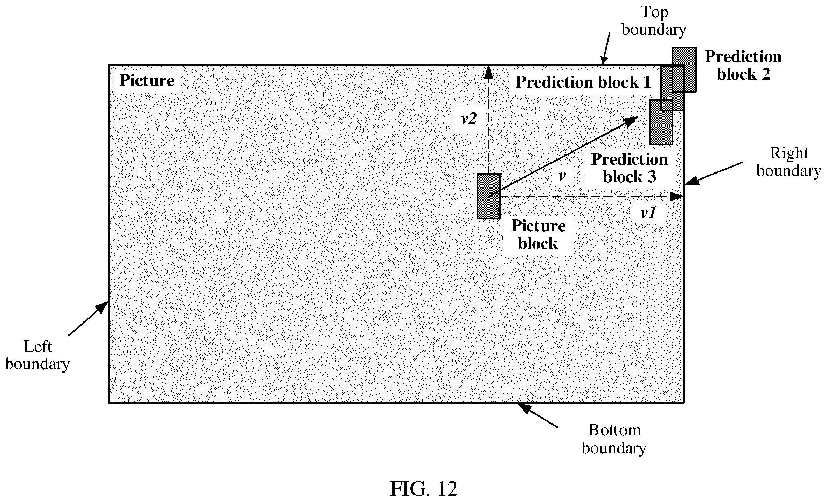

In a possible implementation, the boundary in the preset direction in this embodiment of the present invention refers to an edge location, inside the picture, of a prediction reference pixel (including an integer pixel and a fractional pixel) obtained in the prediction direction, and is generally a picture boundary. In an example, as shown in FIG. 12, during encoding, a picture block obtains a prediction block by using a prediction vector v. All pixels in the prediction block of a picture are located at a picture boundary inside the picture, that is, at a boundary in the preset direction, such as a top boundary, a bottom boundary, a left boundary, or a right boundary that are shown in the figure.

In a possible implementation, in this embodiment of the present invention, that the boundary in the preset direction is exceeded means that a pixel in the prediction block is located outside the picture in a direction, in other words, the boundary in the preset direction is exceeded. In an example, as shown in FIG. 12, pixels in the upper right direction of a prediction block 2 are located outside the picture and reference pixels exceed both the top boundary and the right boundary.

In a possible implementation, in this embodiment of the present invention, that the boundary in the preset direction is not exceeded means that all pixels in the prediction block are located inside the picture. In an example, as shown in FIG. 12, all pixels of a prediction block 1 and a prediction block 3 are located inside the picture and do not exceed a boundary in any direction.

In a possible implementation, the decoding the at least one frame of picture data based on the indication information that is described in this embodiment of the present invention includes: splicing a plurality of received bitstreams of the media data, to obtain a single bitstream after splicing. A splicing manner may be determined based on an indication result of the indication information. For example, if prediction pixels in a sub-bitstream do not exceed the boundaries in the four directions, a splicing location of the sub-bitstream may be located in four directions, that is, a top, a bottom, a left, and a right direction of another sub-bitstream. When prediction pixels in a sub-bitstream exceed boundaries in some directions, the sub-bitstream cannot be spliced with another sub-bitstream at locations corresponding to these out-of-boundary directions. If prediction pixels in a sub-bitstream exceed the boundaries in the four directions, the sub-bitstream cannot be spliced with another bitstream in the four directions. When the prediction pixel in the sub-bitstream is constrained to exceed a boundary for splicing, a splicing sequence of the sub-bitstream may not be constrained. The sub-bitstream may be repeatedly spliced.

In an embodiment of the present invention, in a same frame of picture obtained after the bitstream obtained after splicing is decoded, frame numbers of different sub-pictures may be the same or may be different. In other words, for the splicing, whether different sub-pictures in a frame of a picture obtained by decoding a bitstream obtained after splicing correspond to a same frame number is not limited in the present invention. For example, in the first frame of picture obtained after decoding, a sub-picture sub 0 may be the first frame of the sub 0, and a sub-picture sub 1 may not be the first frame of the sub 1. Different to-be-spliced sub-bitstreams may be sub-bitstreams in a same time segment, or may be sub-bitstreams in different time segments, or may be sub-bitstreams starting from different frame numbers in a same time segment. This is not limited for the splicing.

According to the media information processing method in this embodiment of the present invention, information about whether the prediction reference pixel for picture coding exceeds a boundary is added to the bitstream, so that it is possible to splice a plurality of bitstreams. Required bitstreams are spliced and then are decoded, so that a plurality of picture sequences can be decoded by using only a single decoder, thereby avoiding a resource waste problem when a plurality of decoders are used to decode a plurality of bitstreams in a conventional solution.

In an embodiment according to a second aspect of the present invention, a media information processing apparatus is disclosed. The apparatus includes:
a receiving module, configured to obtain media data, where the media data includes indication information and at least one frame of picture data, the indication information is used to indicate whether a prediction pixel corresponding to a pixel in a picture exceeds a boundary in a preset direction, and the preset direction includes at least one of the following directions: a top direction, a bottom direction, a left direction, or a right direction; and a processing module, configured to decode the at least one frame of picture data based on the indication information.

The processing apparatus in this embodiment of the present invention may be a device that has a video or picture decoding function, for example, a wearable device (such as an AR/VR helmet or AR/VR glasses), a server, an intelligent terminal (such as a mobile phone or a tablet computer), a television, or a set-top box.

The receiving module in this embodiment of the present invention may be a communication transmission device such as a receiver.

The processing module in this embodiment of the present invention may be a processer.

In a possible implementation, the indication information includes at least one identifier, and the identifier has a one-to-one correspondence with the preset direction.

In a possible implementation, the picture data is picture data obtained after the picture is encoded by using the ITU H.264, and supplemental enhancement information (supplementary enhancement information, SEI) of the media data includes the indication information.

In a possible implementation, the picture data is picture data obtained after the picture is encoded by using the ITU H.265, and supplemental enhancement information (supplementary enhancement information, SEI) of the media data includes the indication information.

In a possible implementation, the picture data is encapsulated in a track (track), and a box (box) of the track includes the indication information.

In a possible implementation, the picture data may be picture data obtained after encoding is performed by using the ITU H.264/H.265 or another private standard, may also be encapsulated in a track, and the indication information is encapsulated in a media presentation description (Media presentation description, MPD) file.

For a specific example and an implementation of the apparatus embodiment according to the second aspect of the present invention, refer to the related examples in the method embodiment according to the first aspect. Details are not described herein.

In an embodiment according to a third aspect of the present invention, a media information processing apparatus is disclosed. The apparatus includes one or more processors and a memory. The memory is coupled to the one or more processors, the memory is configured to store computer program code, the computer program code includes an instruction, and when the one or more processors execute the instruction, the processing apparatus performs the media information processing method according to any one of the first aspect or the possible implementations of the first aspect.

In an embodiment according to a fourth aspect of the present invention, a computer-readable storage medium is disclosed. The computer-readable storage medium stores an instruction, and when the instruction is run on a device, the device is enabled to perform the media information processing method according to any one of the first aspect or the possible implementations of the first aspect.

In an embodiment according to a fifth aspect of the present invention, a processor is disclosed. The processor is configured to perform the media information processing method according to any one of the first aspect or the possible implementations of the first aspect.

### BRIEF DESCRIPTION OF DRAWINGS

To describe technical solutions in embodiments of the present invention more clearly, the following briefly describes the accompanying drawings required for describing the embodiments. Clearly, the accompanying drawings in the following description show merely some embodiments of the present invention, and a person of ordinary skill in the art may derive other drawings from these accompanying drawings without creative efforts.
FIG. 1 is a schematic diagram of multi-bitstream picture decoding in the prior art;
FIG. 2 is a schematic diagram of a transmission block diagram according to an embodiment of the present invention;
FIG. 3 is a schematic diagram of a bitstream splicing processing method according to an embodiment of the present invention;
FIG. 4 is a schematic diagram of another type of bitstream splicing according to an embodiment of the present invention;
FIG. 5 is a schematic diagram of bitstream splicing in a constrained condition according to an embodiment of the present invention;
FIG. 6 is a schematic diagram of bitstream splicing location exchange according to an embodiment of the present invention;
FIG. 7 is a schematic diagram of bitstream splicing according to an embodiment of the present invention;
FIG. 8 is a schematic diagram of performing splicing processing on a tile bitstream according to an embodiment of the present invention;
FIG. 9 is a flowchart of a media information processing method according to an embodiment of the present invention;
FIG. 10 is a schematic structural diagram of a media information processing apparatus according to an embodiment of the present invention;
FIG. 11 is a schematic diagram of specific hardware of a media information processing apparatus according to an embodiment of the present invention; and
FIG. 12 is a schematic diagram of picture boundaries according to an embodiment of the present invention.

### DESCRIPTION OF EMBODIMENTS

The following clearly and completely describes technical solutions in embodiments of the present invention with reference to the accompanying drawings in the embodiments of the present invention.

In some embodiments of the present invention:
Video decoding (video decoding): Video decoding is a processing process of restoring a bitstream to a reconstructed picture according to a specific syntax rule and processing method.
Video coding (video encoding): Video encoding is a processing process of compressing a picture sequence into a bitstream.
Video coding (video coding): Video coding is an umbrella term of video encoding and video decoding. The translated Chinese term of video coding is the same as that of video encoding.
Panoramic video: A panoramic video is also referred to as a 360-degree panoramic video or a 360-degree video, and is a video shot by using a plurality of cameras in omnidirectional 360 degrees. When viewing the video, a user may randomly adjust a field of view of the user for viewing.
Tile: A tile is a square coding region, in the HEVC video coding standard, obtained by dividing a to-be-encoded picture. A frame of picture may be divided into a plurality of tiles, and the tiles jointly form the frame of picture. Each tile may be independently encoded.
Sub-picture (sub-picture): A picture is divided, to obtain a part of the original picture, and the part of the original picture is referred to as a sub-picture of the picture. In some embodiments, the sub-picture is square in shape. The sub-picture may be a part of a frame of picture.
MCTS: The full name of MCTS is motion-constrained tile sets, motion-constrained tile sets. MCTS is a coding technology for a tile, and in this technology, a motion vector inside the tile is constrained during encoding, so that tiles at a same location in a picture sequence do not refer to picture pixels outside the tile region location in time domain, and therefore, each tile in time domain can be independently decoded.
Picture sub-region: For ease of description of this patent, the picture sub-region is used as an umbrella term of tiles or sub-pictures. It may be understood that the sub-picture in the present invention may also include a picture divided in a tile coding scheme.
Tile-wise encoding: Tile-wise encoding is a manner of video encoding, and is a process in which a picture sequence is divided into some picture sub-regions, and all the sub-regions are separately and independently encoded, to generate a single bitstream or a plurality of bitstreams. In some embodiments, the tile-wise encoding in the application may be tile-wise encoding in a VDC video coding scheme.
track: A track is translated as "track" in Chinese and is defined in the standard ISO/IEC 14496-12 as a "timed sequence of related samples (q.v.) in an ISO base media file. NOTE: For media data, a track corresponds to a sequence of images or sampled audio; for hint tracks, a track corresponds to a streaming channel." Translation: "timed sequence of related samples in an ISO base media file. NOTE: For media data, a track corresponds to a sequence of images or sampled audio; for hint tracks, a track corresponds to a streaming channel." Explanation: the track is a series of samples with a time attribute that are encapsulated in an ISOBMFF encapsulation manner, for example, in a video track, a video sample is a sample generated by encapsulating bitstream generated after a video encoder encodes each frame, according to the ISOBMFF specification.
box: A box is translated as "box" in Chinese and is defined in the ISO/IEC 14496-12 standard as an "object-oriented building block defined by a unique type identifier and length. NOTE: Called 'atom' in some specifications, including the first definition of MP4." Translation: "object-oriented building block defined by a unique type identifier and length. Note: Called 'atom' in some specifications, including the first definition of MP4." The box is a basic unit that constitutes an ISOBMFF file, and the box may include another box.
SEI: The full name of SEI is supplementary enhancement information, and the SEI is a type of a network access unit (Network Abstract Layer Unit, NALU) that is defined in the video coding standard (h.264, h.265).

A media presentation description (Media presentation description, MPD) is a document specified in the ISO/IEC 23009-1 standard. The document includes metadata that is used by a client to construct an HTTP-URL. The MPD includes one or more period (period) elements. Each period element includes one or more adaptation sets (adaptationset). Each adaptationset includes one or more representations (representation). Each representation includes one or more segments. The client selects a representation based on information in the MPD, and constructs an HTTP-URL of a segment.

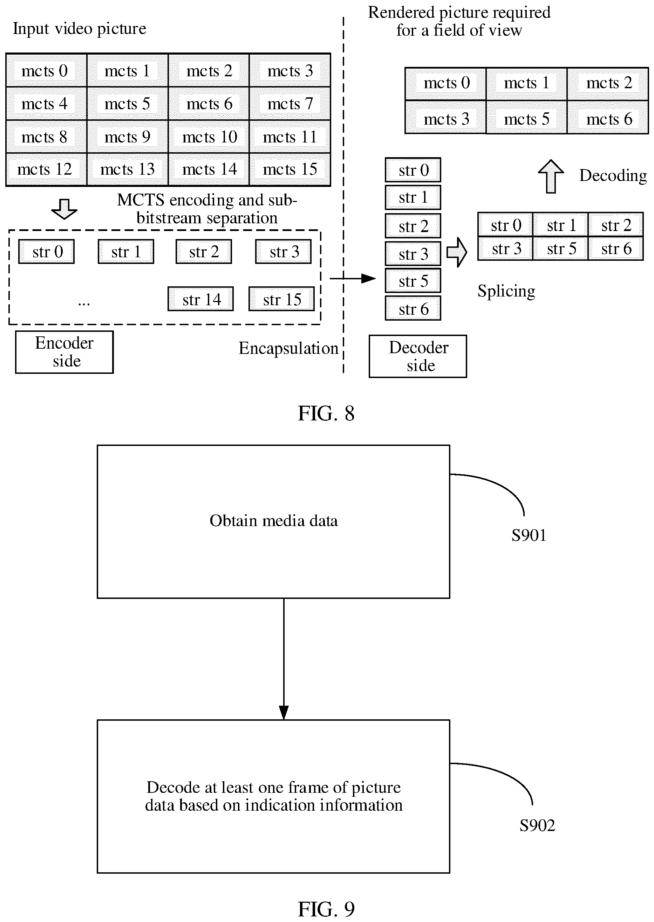

As shown in FIG. 9, in an embodiment according to an aspect of the present invention, a media information processing method S90 is disclosed. The method S90 includes the following steps.

### S901. Obtain media data.

The media data includes indication information and at least one frame of picture data, the indication information is used to indicate whether a prediction pixel corresponding to a pixel in a picture exceeds a boundary in a preset direction, and the preset direction includes at least one of the following directions:
a top direction, a bottom direction, a left direction, or a right direction.

### S902. Decode the at least one frame of picture data based on the indication information.

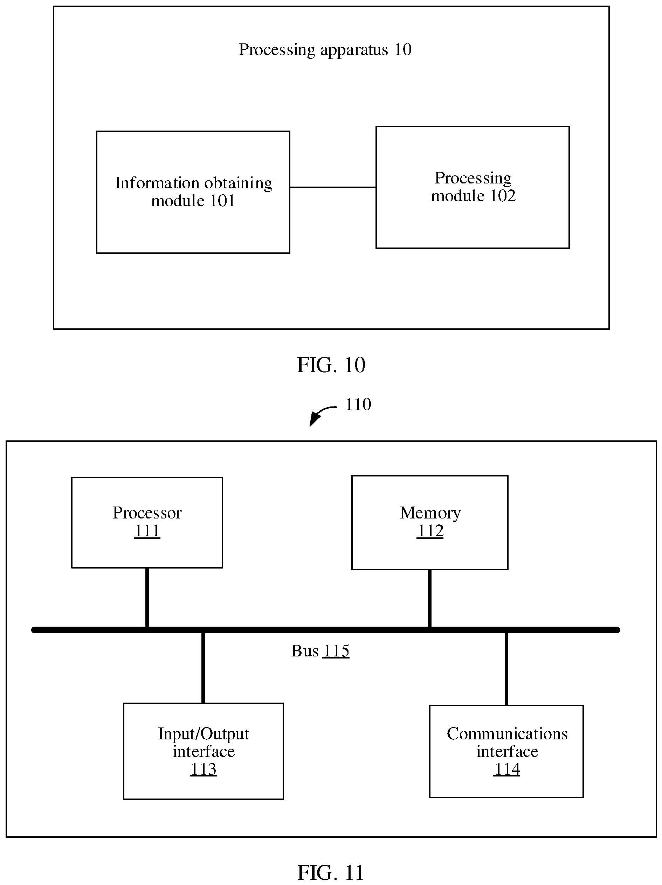

As shown in FIG. 10, in an embodiment according to an aspect of the present invention, a media information processing apparatus 10 is disclosed. The apparatus 10 includes:
an information obtaining module 101 and a processing module 102. The information obtaining module 101 is configured to obtain media data. The media data includes indication information and at least one frame of picture data. The indication information is used to indicate whether a prediction pixel corresponding to a pixel in a picture exceeds a boundary in a preset direction, and the preset direction includes at least one of the following directions: a top direction, a bottom direction, a left direction, or a right direction. The processing module 102 is configured to decode the at least one frame of picture data based on the indication information.

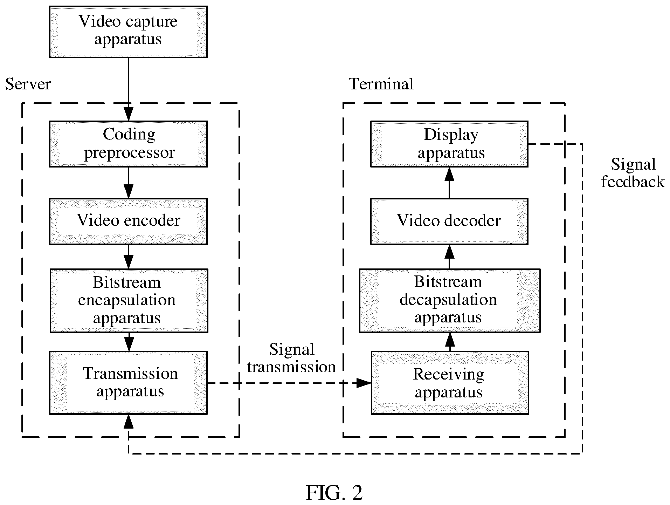

The present invention is applied to a video coding system and a transmission system. In an embodiment, a block diagram of video coding and transmission based on a sub-bitstream is shown in FIG. 2. On a server side, a video or a picture is obtained by a video capture apparatus. The video capture apparatus may be a video or picture collection apparatus such as a camera, or may be a receiving apparatus that receives data of a video or a picture from another device. A coding preprocessor is configured to perform some coding pre-processing on the video or the picture. The coding preprocessor module may perform sub-region partitioning (or division) on the video or the picture. It may be understood that the coding preprocessor may alternatively be a part of a video encoder, or the video encoder performs the foregoing functions of the coding preprocessor. The video encoder is configured to encode the video or the picture according to a specific encoding rule. For example, an encoding scheme specified in the H.264 or the H.265 may be used, or the video or the picture may be encoded based on another private coding technology. For a bitstream obtained after encoding, a bitstream encapsulation apparatus may perform bitstream encapsulation on the bitstream according to a specific encapsulation format. For example, the encapsulation format may be an encapsulation format of an MPEG-2 TS stream or another encapsulation manner. Then, a transmission apparatus sends a bitstream obtained after encapsulation to a terminal side. It may be understood that a server and a terminal shown in FIG. 2 are representations relative to a sender and a receiver of the bitstream. In actual product implementation, the server may be a device such as a smartphone or a tablet computer, and the terminal may also be a device such as a smartphone or a tablet computer.

It may be understood that the sub-bitstream in this embodiment of the present invention is described relative to a bitstream obtained after splicing. The obtained sub-bitstream may be a separately transmitted bitstream.

On the terminal side, a receiving apparatus is configured to receive the bitstream from the server side, and then after a bitstream decapsulation apparatus decapsulates the bitstream, a plurality of sub-bitstreams may be obtained and sent to a video decoder. The video decoder decodes the sub-bitstreams, to generate a video or picture obtained after decoding, and finally the video or picture obtained after decoding is displayed by a display apparatus.

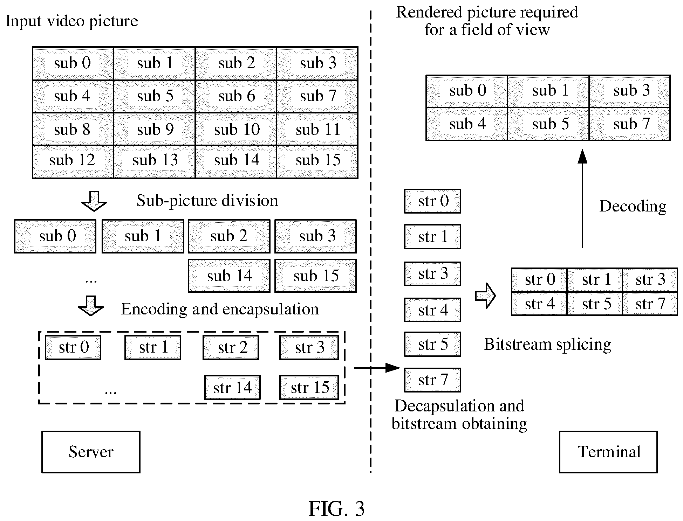

In a possible implementation of the present invention, an embodiment of the present invention provides a sub-picture-based bitstream splicing processing method, a corresponding encoding and transmission manner, and a corresponding decoding and presentation manner. An entire system processing process of the present invention is shown in FIG. 3, and implementation steps of the process are described in detail as follows:

On a server side:
An input video picture is divided into sub-pictures, and each sub-picture is encoded, to generate a plurality of sub-picture bitstreams. For example, the original picture may be divided based on a same width and height (herein, it means that widths and heights of different sub-pictures obtained after division are the same, instead of that a width and a height of a same sub-picture need to be the same, and the width and the height of the same sub-picture may be the same or different), to obtain a plurality of square sub-pictures, and then the plurality of sub-pictures are encoded. During the encoding, predictive motion vector constraint may be performed on a sub-picture, so that a prediction pixel of the sub-picture does not exceed one or some boundaries of four boundaries of the sub-picture. The constraint determines a direction in which bitstream splicing may be performed on the sub-picture. Information about that the prediction pixel does not exceed the picture boundary is written into an SEI message of the bitstream. The message may be represented by using the following syntactic elements:

**Table 1.1 SEI syntax**

| sei_payload(payloadType, payloadSize) { | **Descriptor** |
|---|---|
| if(nal_unit_type == PREFIX_SEI_NUT) | |
| if(payloadType == 0) | |
| buffering_period(paylo adS ize) | |
| ... | |
| else if(payloadType == 154) | |
| mcts_extraction_info_nesting(payloadSize) | |
| else if**(payloadType == 155)** | |
| **sub_picture_stream_aggregate (payloadSize)** | |
| ... | |
| else if(payloadType == 160) | |
| layers_not_present(payloadSize) /* specified in Annex F */ | |
| } | |
| } | |

**Table 1.2 Sub-bitstream splicing SEI message syntax**

| sub_picture_stream_aggregate (payloadSize) { | **Descriptor** |
|---|---|
| **sub_pic_str_aggregate_enable_flag** | u(1) |
| if **(sub_pic_str_aggregate_enable_flag)** { | |
| **ref_pixel_within_left_boundary_flag** | u(1) |
| **ref_pixel_within_right_boundary_flag** | u(1) |
| **ref_pixel_within_top_boundary_flag** | u(1) |
| **ref_pixel_within_bottom_boundary_flag** | u(1) |
| } | |
| } | |

In Table 1.1, a new type 155 is added for an SEI type and is used to indicate whether a current bitstream can be used for splicing, and information sub_picture_stream_aggregate (payloadSize) is added. Meanings of syntactic elements included in sub_picture_stream_aggregate are as follows:
sub_pic_str_aggregate_enable_flag is used to indicate whether the prediction pixel of the sub-picture exceeds a picture boundary to make reference. For example, that a value of sub_pic_str_aggregate_enable_flag is 1 indicates that the prediction pixel of the sub-picture does not exceed a picture boundary to make reference, in other words, the sub-picture bitstream may be used for bitstream splicing. That a value of sub_pic_str_aggregate_enable_flag is 0 indicates that prediction pixels of the current picture may exceed all boundaries of the picture to make reference, in other words, the sub-bitstream cannot be used for bitstream splicing.
ref_pixel_within_left_boundary_flag is used to indicate whether the prediction pixel in the sub-picture bitstream exceeds a left boundary of the picture to make reference. For example, that a value of ref_pixel_within_left_boundary_flag is 1 indicates that the prediction pixel in the sub-picture bitstream does not exceed the left boundary of the picture to make reference, in other words, the left boundary of the sub-picture may be used for splicing. That a value of ref_pixel_within_left_boundary_flag is 0 indicates that the prediction pixel of the sub-picture exceeds the left boundary to make reference.
ref_pixel_within_right_boundary_flag is used to indicate whether the prediction pixel in the sub-picture bitstream exceeds a right boundary of the picture to make reference. For example, that a value of ref_pixel_within_right_boundary_flag is 1 indicates that the prediction pixel in the sub-picture bitstream does not exceed the right boundary of the picture to make reference, in other words, the right boundary of the sub-picture may be used for splicing. That a value of ref_pixel_within_right_boundary_flag is 0 indicates that the prediction pixel of the sub-picture exceeds the right boundary to make reference.
ref_pixel_within_top_boundary_flag is used to indicate whether the prediction pixel in the sub-picture bitstream exceeds a top boundary of the picture to make reference. For example, that a value of ref_pixel_within_top_boundary_flag is 1 indicates that the prediction pixel in the sub-picture bitstream does not exceed the top boundary of the picture to make reference, in other words, the top boundary of the sub-picture may be used for splicing. That a value of ref_pixel_within_top_boundary_flag is 0 indicates that the prediction pixel of the sub-picture exceeds the top boundary to make reference.
ref_pixel_within_bottom_boundary_flag is used to indicate whether the prediction pixel in the sub-picture bitstream exceeds a bottom boundary of the picture to make reference. For example, that a value of ref_pixel_within_bottom_boundary_flag is 1 indicates that the prediction pixel in the sub-picture bitstream does not exceed the bottom boundary of the picture to make reference, in other words, the bottom boundary of the sub-picture may be used for splicing. That a value of ref_pixel_within_bottom_boundary_flag is 0 indicates that the prediction pixel of the sub-picture exceeds the bottom boundary to make reference.

Then, each sub-bitstream may be encapsulated and stored in a server.

On a terminal side:
Based on user behavior, a terminal requests required bitstreams from the server, and decapsulates the received bitstreams.

An SEI message sub_picture_stream_aggregate (payloadSize) of each sub-bitstream is parsed, and therefore, a pixel reference out-of-boundary status in each sub-bitstream is obtained based on the values of the syntactic elements in Table 1.1 and Table 1.2, so that a location at which the sub-bitstream can be spliced is learned of, and bitstream splicing is performed. The bitstream obtained after splicing is a long bitstream obtained by splicing each sub-bitstream according to a specific sequence. In FIG. 3, for ease of understanding and indicating a location of a sub-picture obtained by decoding the bitstream obtained after splicing, the bitstream obtained after splicing is drawn as a two-dimensional splicing, to conveniently indicate a two-dimensional location corresponding to a sub-picture obtained by decoding each sub-bitstream. Actually, the sub-bitstream includes location information of the corresponding sub-picture. Modifying a location of a sub-picture in a picture obtained after decoding may be implemented by modifying location information in the sub-bitstream. In this embodiment, a splicing location of the sub-bitstream actually refers to a location of a corresponding sub-picture in a picture obtained after decoding, and a splicing sequence of the sub-bitstream refers to a sequence and an arrangement of the corresponding sub-picture in the picture obtained after decoding. In the picture obtained by decoding the bitstream obtained after splicing, sub-picture locations are rearranged based on a bitstream splicing sequence. In some embodiments, the arranged sub-bitstreams need to meet a condition that the picture obtained after decoding is a square picture.

In the foregoing steps, a bitstream splicing manner may vary with a situation, such as that pixel reference out-of-boundary status information obtained from the sub-bitstream is different, or that a quantity of spliced sub-bitstreams is different. Several common cases are listed herein for description, but the present invention is not limited to the following cases.

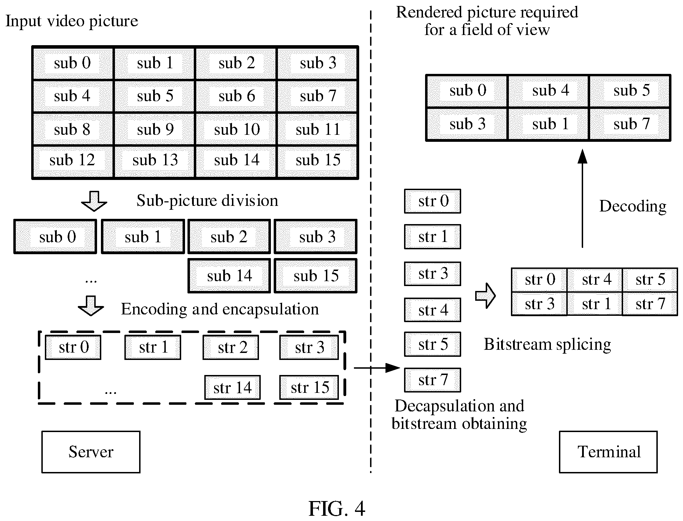

In a first case, it is assumed that a reference location of a prediction pixel of each sub-bitstream in each of four boundaries does not exceed the boundary. In this case, a sub-picture corresponding to each sub-bitstream may be spliced, at four boundaries, with a sub-picture corresponding to another bitstream, and the sub-bitstreams may be spliced in a disrupted sequence. An example of a bitstream splicing process is shown in FIG. 4.

A thick box line in FIG. 4 indicates a case in which no reference pixel exceeds a boundary when a current sub-picture is encoded. Reference pixel out-of-boundary constraint is performed on each of four boundaries of each sub-picture. Therefore, in a process of decoding a bitstream obtained after splicing, no pixel of another sub-picture is referred to when prediction pixel reference is performed on a picture corresponding to each sub-bitstream, so that a reconstructed picture obtained after decoding is consistent with a reconstructed picture obtained by separately decoding the sub-bitstream.

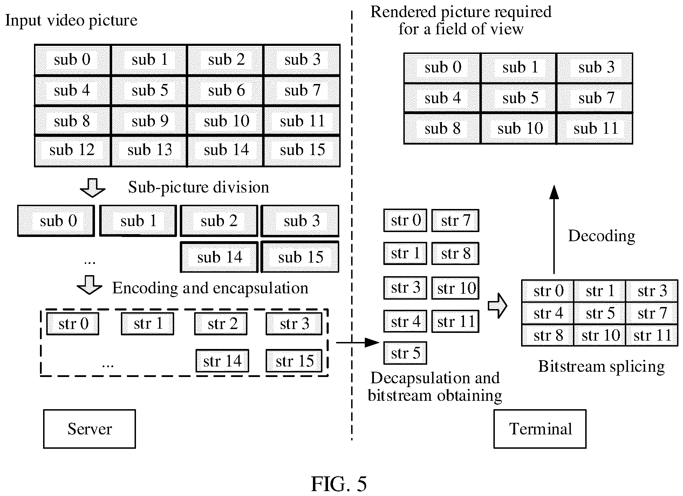

In a second case, during sub-bitstream encoding, some pixels of a coding block exceed some or all boundaries for pixel reference. In this case, bitstreams are spliced based on a status of pixel out-of-boundary reference, and a corresponding splicing sequence of the sub-bitstreams is constrained. As shown in FIG. 5.

In FIG. 5, for a sub-picture located at a boundary of an input video picture, reference pixel constraint is not performed on the boundary of the original picture, and reference pixel constraint is performed on a boundary of the sub-picture that is located in the middle part of the original picture. In this case, for a sub-bitstream corresponding to a sub-picture with an unconstrained boundary, in a bitstream obtained after splicing, it is required that the unconstrained boundary corresponding to the sub-picture is not adjacent to a boundary of another sub-picture. For example, for a sub-picture sub 0, reference pixel out-of-boundary constraint is not performed on a left boundary and a top boundary of the sub 0, and therefore, for a location of the sub-bitstream in the bitstream obtained after splicing, it is required that, in a picture obtained after decoding, another sub-picture should not exist on the left and the top of the corresponding sub-picture. When this requirement is met, a sub-bitstream arrangement sequence may be unlimited, for example, a sub 4 and a sub 8 may be interchanged. The location in this embodiment does not mean a location of a finally displayed picture, but means a location of a corresponding sub-picture in the picture obtained by decoding the bitstream obtained after splicing.

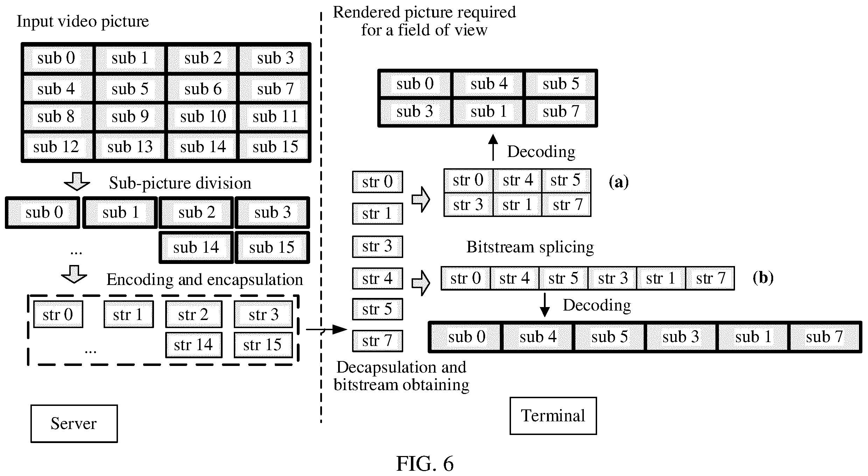

In a third case, when there is a relatively large quantity of obtained sub-bitstreams, and a width of a picture obtained after decoding a bitstream spliced by the sub-bitstreams exceeds a maximum limit of a decoder, locations of the sub-bitstreams need to be changed, so that rows of corresponding sub-pictures of the sub-bitstreams are changed. As shown in FIG. 6, bitstreams are spliced by using a method (a) or a method (b), and all sub-pictures can be obtained after decoding by using both the two methods. However, if a width of a picture obtained after decoding when bitstreams are spliced by using the method (b) exceeds a decoding capability of a decoder specified in a standard, a location of the sub-bitstreams should be changed, and the method (a) is used for splicing, to increase a quantity of rows of the sub-pictures and reduce a quantity of columns of the sub-pictures.

In an example, after splicing is performed by using the method a and the method b, a picture obtained by decoding when the method a is used for splicing is a 3x2 sub-picture, and a picture obtained by decoding when the method b is used for splicing is a 6x1 sub-picture. In this case, a width of the 6x1 picture may exceed a decoding capability of the decoder, and consequently decoding cannot be performed. In addition, different levels in the H.265 standard also constrain a maximum quantity of tiles separately in a vertical and a horizontal direction. It should be indicated in this case that when bitstream splicing makes a bitstream obtained exceeds a bitstream decoding capability, a splicing manner that can meet the decoding capability needs to be changed to.

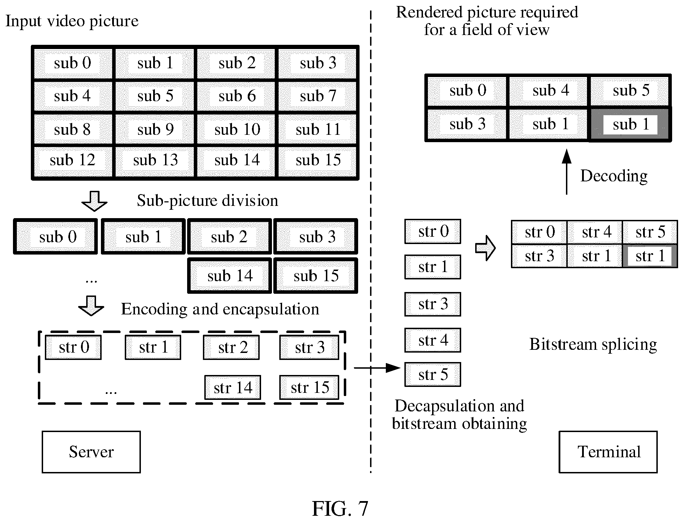

In a fourth case, when a quantity of obtained sub-bitstreams is insufficient to make a picture obtained after decoding a square picture, the bitstreams may be assembled, so that a bitstream obtained after splicing can be decoded into a square picture. In an optional manner, a current bitstream that meets a splicing requirement may be replicated and spliced for a plurality of times, so that a bitstream obtained after splicing can be decoded into a square picture. As shown in FIG. 7, when a terminal only selects five sub-bitstreams for splicing, and a picture obtained after decoding cannot become a square picture, it should be noted that a sub-picture sub 1 may be located at a lower right corner of the picture. Therefore, a sub-bitstream str 1 may be replicated and spliced at the end of the bitstream, so that a bitstream obtained after splicing may be decoded into a square picture.

In a fifth case, no bitstream can be spliced, or some bitstreams cannot be spliced.

When prediction reference pixels in each sub-picture exceed all boundaries during encoding, a decoder obtains, by parsing, that an SEI message of each sub-picture is sub_pic_str_aggregate_enable_flag = 0, in other words, no bitstream can be spliced at any location. In this case, the decoder does not perform bitstream splicing processing.

When prediction reference pixels in some sub-pictures exceed all boundaries during encoding, or when only some of obtained bitstreams meet a splicing condition and a requirement for a bitstream splicing location, and the other bitstreams cannot meet the requirement for a splicing location, bitstream splicing may be performed on the bitstreams that can be spliced, and no splicing processing is performed on the bitstreams that do not meet the requirement.

A specific method for splicing a plurality of bitstreams is as follows, but the present invention is not limited to the method.
1. A splicing apparatus parses an SEI message of sub_picture_stream_aggregate of each sub-bitstream, to obtain a reference pixel out-of-boundary constraint status in each sub-bitstream.
2. Determine, based on the constraint status, a placement location of a sub-picture in a picture obtained after decoding, in other words, determine an arrangement sequence of the sub-bitstream in a bitstream obtained after splicing.
3. Parse a parameter set (including a video parameter set VPS, a sequence parameter set SPS, and a picture parameter set PPS) of each sub-bitstream, and fuse information such as a width and a height of the picture obtained after decoding, to make a new bitstream parameter set as a parameter set of the bitstream obtained after splicing; and remove the parameter set of each sub-bitstream, and modify information in a slice header (Slice header) based on the placement location of the sub-picture, to obtain a to-be-spliced sub-bitstream.
4. Splice, according to the arrangement sequence of the sub-bitstream in step 2, each to-be-spliced sub-bitstream by frame, and a splicing manner is binary head-to-tail splicing.
5. Splice the parameter set of the bitstream obtained after splicing, in a binary splicing manner, before the bitstream obtained after splicing in step 4, to obtain a final bitstream obtained after splicing.

Finally, the bitstream obtained after splicing may be decoded, and is rendered and presented on a display device.

In this solution of the present invention, information about whether the prediction reference pixel for sub-picture encoding exceeds a boundary is added to the bitstream, so that it is possible to splice a plurality of sub-bitstreams. Required bitstreams are spliced and then are decoded, so that a plurality of sub-picture sequences can be decoded by using only a single decoder, thereby avoiding a resource waste problem when a plurality of decoders are used to decode a plurality of bitstreams in a conventional solution.

In another possible implementation of the present invention, this embodiment provides a method for performing splicing processing on a tile bitstream, a corresponding encoding transmission manner, and a corresponding decoding presentation manner when an encoder is an MCTS encoder. An entire system processing process is shown in FIG. 8, and system implementation steps of the process are described as follows:

On a server side:
MCTS encoding is performed on an input video, and an MCTS sub-bitstream is generated and saved to the server side. For each sub-bitstream, information indicating that a prediction reference pixel of the bitstream does not exceed a picture boundary may be written into an SEI message of the bitstream based on the manner in the foregoing embodiment. The syntactic elements are the same as the syntactic elements in the foregoing embodiment. Because encoding is performed by using the MCTS technology, the prediction reference pixel of each sub-bitstream in a corresponding sub-picture of the sub-bitstream does not exceed any boundary of the picture, so that for each sub-bitstream, the following syntax is satisfied:
sub_pic_str_aggregate_enable_flag = 1,
ref_pixel_within_left_boundary_flag = 1,
ref_pixel_within_right_boundary_flag = 1,
ref_pixel_within_top_boundary_flag = 1,
ref_pixel_within_bottom_boundary_flag = 1.

Each sub-bitstream is encapsulated and stored on a server.

On a terminal side:
Based on user behavior, a terminal requests required bitstreams from the server, and decapsulates the bitstreams.

An SEI message sub_picture_stream_aggregate (payloadSize) of each sub-bitstream is parsed, to obtain a pixel reference out-of-boundary status in each sub-bitstream, and bitstream splicing is performed. The sub-bitstream encoded by using the MCTS technology may be spliced at any location in a bitstream obtained after splicing, and it only needs to meet a condition that a picture obtained by decoding the bitstream obtained after splicing is a square picture.

The bitstream obtained after splicing is decoded, and is rendered and presented on a display device.

According to the implementation of this embodiment, prediction reference pixel out-of-boundary information of the sub-picture is added to the bitstream, so that when a tile base track is not added during encapsulation on the bitstream obtained after MCTS encoding, sub-bitstream splicing and decoding can also be supported on a decoder side, and a request for the tile base track on the server side is omitted.

In a possible implementation of the present invention, this embodiment provides syntactic elements and semantics of information that is in an OMAF file format and that is used to indicate whether a sub-bitstream can be spliced. Specifically, modifications include generation of sub-bitstream splicing information by a server side and parsing of the sub-bitstream splice information by a terminal.

On a server side:
An input video picture is divided into sub-pictures, and each sub-picture is encoded, to generate a plurality of sub-picture bitstreams.

Each sub-bitstream is encapsulated, and each sub-bitstream may be independently encapsulated into a track, for example, a sub-picture track. Syntax description information about whether the sub-bitstream can be spliced may be added to the sub-picture track, and an example is as follows:

The following syntax is added to a spco box:

```
          aligned(8) class SubPictureCompositionBox extends
 TrackGroupTypeBox('spco') {
            unsigned int(1) motion_constrained_presence_flag;
          bit(7) reserved=0;
          if(motion_constrained_presence_flag==1) {
            unsigned int(1) motion_constrained_left;
            unsigned int(1) motion_constrained_right;
            unsigned int(1) motion_constrained_top;
            unsigned int(1) motion_constrained_bottom;
            bit(4) reserved=0;
            }
          unsigned int(16) track_x;
          unsigned int(16) track_y;
          unsigned int(16) track_width;
          unsigned int(16) track_height;
          unsigned int(16) composition_width;
          unsigned int(16) composition_height;
          }
```

Semantics of some syntactic elements are as follows:
motion_constrained_presence_flag is used to indicate whether a motion vector in the bitstream is constrained. In an example, that a value of motion_constrained_presence_flag is 1 indicates that in a bitstream in a current track, a motion vector used for prediction is constrained within a boundary of a sub-picture. In this case, the bitstream may be spliced at the constrained boundary. That a value of motion_constrained_presence_flag is 0 indicates that the motion vector is not constrained.
motion_constrained_left is used to indicate whether a motion vector used for prediction is constrained within a left boundary of the picture. In an example, that a value of motion_constrained_left is 1 indicates that the motion vector used for prediction is constrained within the left boundary of the sub-picture, and a prediction pixel does not exceed the left boundary of the sub-picture to make reference. That a value of motion_constrained_left is 0 indicates that the motion vector used for prediction is not constrained within the left boundary of the sub-picture.
motion_constrained_right is used to indicate whether a motion vector used for prediction is constrained within a right boundary of the picture. In an example, that a value of motion_constrained_right is 1 indicates that the motion vector used for prediction is constrained within the right boundary of the sub-picture, and a prediction pixel does not exceed the right boundary of the sub-picture to make reference. That a value of motion_constrained_left is 0 indicates that the motion vector used for prediction is not constrained within the left boundary of the sub-picture.
motion_constrained_top is used to indicate whether a motion vector used for prediction is constrained within a top boundary of the picture. In an example, that a value of motion_constrained_top is 1 indicates that the motion vector used for prediction is constrained within the top boundary of the sub-picture, and a prediction pixel does not exceed the top boundary of the sub-picture to make reference. That a value of motion_constrained_left is 0 indicates that the motion vector used for prediction is not constrained within the left boundary of the sub-picture.
motion_constrained_bottom is used to indicate whether a motion vector used for prediction is constrained within a bottom boundary of the picture. In an example, that a value of motion_constrained_bottom is 1 indicates that the motion vector used for prediction is constrained within the bottom boundary of the sub-picture, and a prediction pixel does not exceed the bottom boundary of the sub-picture to make reference. That a value of motion_constrained_left is 0 indicates that the motion vector used for prediction is not constrained within the left boundary of the sub-picture.

On a terminal side:
Based on user behavior, a terminal requests required bitstreams from the server, and decapsulates the bitstreams. In a decapsulation process, SubPictureCompositionBox in the spco box is parsed, to obtain syntax information about whether the sub-bitstream can be spliced, so as to obtain a pixel reference out-of-boundary status in each sub-bitstream, and further learn a location at which the sub-bitstream can be spliced.

Bitstream splicing is performed based on the obtained location at which the sub-bitstream can be spliced.

A bitstream obtained after splicing is decoded, and is rendered and presented on a display device.

In another possible implementation of the present invention, this embodiment extends syntax, in an SEI in the foregoing embodiment, about whether the sub-bitstream can be spliced, and make some modifications to the information about whether the bitstream can be spliced.

An optional method for representing, by using an SEI message in a bitstream, the information about whether the bitstream can be spliced is shown in Table 2. Compared with the Embodiment 1, the total SEI syntax is unchanged, but sub-bitstream splicing SEI message syntax is as follows:

**Table 2 Elements of sub-bitstream splicing SEI message syntax**

| sub_picture_stream_aggregate (payloadSize) { | Descriptor |
|---|---|
| sub_pic_str_aggregate_enable_flag | u(1) |
| } | |

Meanings of the syntactic elements are as follows:
sub_pic_str_aggregate_enable_flag is used to indicate whether a prediction pixel in a sub-picture bitstream exceeds a boundary of a picture to make reference. In an example, that a value of sub_pic_str_aggregate_enable_flag is 1 indicates that the prediction pixel of the sub-picture does not exceed any boundary of the picture to make reference, in other words, the sub-picture bitstream can be used for bitstream splicing. That a value of sub_pic_str_aggregate_enable_flag is 0 indicates that prediction pixels of the current picture may exceed all boundaries of the picture to make reference, in other words, the sub-bitstream cannot be used for bitstream splicing.

In another possible implementation of the present invention, this embodiment extends syntax, in an SEI in the foregoing embodiment, about whether the sub-bitstream can be spliced, and make some modifications to the information about whether the bitstream can be spliced.

An optional method for representing, by using an SEI message in a bitstream, the information about whether the bitstream can be spliced is shown in Table 3, and sub-bitstream splicing SEI message syntax is as follows:

**Table 3 Elements of sub-bitstream splicing SEI message syntax**

| sub_picture_stream_aggregate (payloadSize) { | **Descriptor** |
|---|---|
| ref_pixel_within_left_boundary_flag | u(1) |
| ref_pixel_within_right_boundary_flag | u(1) |
| ref_pixel_within_top_boundary_flag | u(1) |
| ref_pixel_within_bottom_boundary_flag | u(1) |
| } | |

Meanings of the syntactic elements are as follows:
ref_pixel_within_left_boundary_flag is used to indicate whether a prediction pixel in the sub-picture bitstream exceeds a left boundary of a picture to make reference. In an example, that a value of ref_pixel_within_left_boundary_flag is 1 indicates that the prediction pixel in the sub-picture bitstream does not exceed the left boundary of the picture to make reference, in other words, the left boundary of the sub-picture may be used for splicing. That a value of ref_pixel_within_left_boundary_flag is 0 indicates that the prediction pixel of the sub-picture exceeds the left boundary to make reference.
ref_pixel_within_right_boundary_flag is used to indicate whether a prediction pixel in the sub-picture bitstream exceeds a right boundary of the picture to make reference. In an example, that a value of ref_pixel_within_right_boundary_flag is 1 indicates that the prediction pixel in the sub-picture bitstream does not exceed the right boundary of the picture to make reference, in other words, the right boundary of the sub-picture may be used for splicing. That a value of ref_pixel_within_right_boundary_flag is 0 indicates that the prediction pixel of the sub-picture exceeds the right boundary to make reference.
ref_pixel_within_top_boundary_flag is used to indicate whether a prediction pixel in the sub-picture bitstream exceeds a top boundary of the picture to make reference. In an example, that a value of ref_pixel_within_top_boundary_flag is 1 indicates that the prediction pixel in the sub-picture bitstream does not exceed the top boundary of the picture to make reference, in other words, the top boundary of the sub-picture may be used for splicing. That a value of ref_pixel_within_top_boundary_flag is 0 indicates that the prediction pixel of the sub-picture exceeds the top boundary to make reference.
ref_pixel_within_bottom_boundary_flag is used to indicate whether a prediction pixel in the sub-picture bitstream exceeds a bottom boundary of the picture to make reference. In an example, that a value of ref_pixel_within_bottom_boundary_flag is 1 indicates that the prediction pixel in the sub-picture bitstream does not exceed the bottom boundary of the picture to make reference, in other words, the bottom boundary of the sub-picture may be used for splicing. That a value of ref_pixel_within_bottom_boundary_flag is 0 indicates that the prediction pixel of the sub-picture exceeds the bottom boundary to make reference.

In another possible implementation of the present invention, this embodiment extends syntax, in an OMAF in the foregoing embodiment, about whether a sub-bitstream can be spliced, and make some modifications to the information about whether the bitstream can be spliced.

Several optional methods for adding syntax to a spco box in an OMAF file format for representation are as follows:
Optional method 1: Indication is performed only on whether motion vectors exceed all boundaries, in other words, whether a current sub-bitstream is a bitstream that can be spliced or a bitstream that cannot be spliced is indicated. Syntax added in the spco box is as follows:

   ```
          aligned(8) class SubPictureCompositionBox extends
 TrackGroupTypeBox('spco') {
          unsigned int(1) motion_constrained_presence_flag;
          bit(7) reserved=0;
          unsigned int(16) track_x;
          unsigned int(16) track_y;
          unsigned int(16) track_width;
          unsigned int(16) track_height;
          unsigned int(16) composition_width;
          unsigned int(16) composition_height;
          }
```

   Semantics are as follows:
   motion_constrained_presence_flag is used to indicate whether a motion vector of a bitstream is constrained. In an example, that a value of motion_constrained_presence_flag is 1 indicates that in a bitstream in a current track, motion vectors used for prediction are constrained within all boundaries of a sub-picture. In this case, the bitstream can be spliced. That a value of motion_constrained_presence_flag is 0 indicates that the motion vector is not constrained. In this case, the bitstream cannot be spliced.
Optional method 2: Indication is performed on whether a motion vector exceeds each boundary. Syntax added in the spco box is as follows:

   ```
aligned(8) class SubPictureCompositionBox extends
 TrackGroupTypeBox('spco') {
          unsigned int(1) motion_constrained_left;
          unsigned int(1) motion_constrained_right;
          unsigned int(1) motion_constrained_top;
          unsigned int(1) motion_constrained_bottom;
          bit(4) reserved=0;
          unsigned int(16) track_x;
          unsigned int(16) track_y;
          unsigned int(16) track_width;
          unsigned int(16) track_height;
          unsigned int(16) composition_width;
          unsigned int(16) composition_height;
          }
```

   Semantics are as follows:
   motion_constrained_left is used to indicate whether a motion vector used for prediction is constrained within a left boundary of the sub-picture. In an example, that a value of motion_constrained_left is 1 indicates that the motion vector used for prediction is constrained within the left boundary of the sub-picture, and a prediction pixel does not exceed the left boundary of the sub-picture to make reference. That a value of motion_constrained_left is 0 indicates that the motion vector used for prediction is not constrained within the left boundary of the sub-picture.
   motion_constrained_right is used to indicate whether a motion vector used for prediction is constrained within a right boundary of the sub-picture. In an example, that a value of motion_constrained_right is 1 indicates that the motion vector used for prediction is constrained within the right boundary of the sub-picture, and a prediction pixel does not exceed the right boundary of the sub-picture to make reference. That a value of motion_constrained_left is 0 indicates that the motion vector used for prediction is not constrained within the left boundary of the sub-picture.
   motion_constrained_top is used to indicate whether a motion vector used for prediction is constrained within a top boundary of the sub-picture. In an example, that a value of motion_constrained_top is 1 indicates that the motion vector used for prediction is constrained within the top boundary of the sub-picture, and a prediction pixel does not exceed the top boundary of the sub-picture to make reference. That a value of motion_constrained_left is 0 indicates that the motion vector used for prediction is not constrained within the left boundary of the sub-picture.
   motion_constrained_bottom is used to indicate whether a motion vector used for prediction is constrained within a bottom boundary of the sub-picture. In an example, that a value of motion_constrained_bottom is 1 indicates that the motion vector used for prediction is constrained within the bottom boundary of the sub-picture, and a prediction pixel does not exceed the bottom boundary of the sub-picture to make reference. That a value of motion_constrained_left is 0 indicates that the motion vector used for prediction is not constrained within the left boundary of the sub-picture.
Optional method 3: A version field is changed in a spco box, so that a motion vector of a sub-picture bitstream is constrained, and therefore, a prediction reference pixel does not exceed a boundary of a picture. The version is a field located in a box attribute. Syntax added in the spco box is as follows:

   ```
          aligned(8) class SubPictureCompositionBox extends
 TrackGroupTypeBox('spco', version = 1, flags = 0){
          unsigned int(16) track_x;
          unsigned int(16) track_y;
          unsigned int(16) track_width;
          unsigned int(16) track_height;
          unsigned int(16) composition_width;
          unsigned int(16) composition_height;
          }
```

In the foregoing syntactic expression, version = 1 is used to indicate that motion vectors in the sub-picture bitstream in a current track are constrained within all boundaries.

Optional method 4: A flags field is changed in a spco box, so that a motion vector in a sub-picture bitstream is constrained, and therefore, a prediction reference pixel does not exceed a boundary of a picture. The flags is a field located in a box attribute. Syntax added in the spco box is as follows:

```
          aligned(8) class SubPictureCompositionBox extends
 TrackGroupTypeBox('spco', version = 0, flags = 1){
          unsigned int(16) track_x;
          unsigned int(16) track_y;
          unsigned int(16) track_width;
          unsigned int(16) track_height;
          unsigned int(16) composition_width;
          unsigned int(16) composition_height;
          }
```

In the foregoing syntactic expression, flags = 1 is used to indicate that motion vectors in the sub-picture bitstream in a current track are constrained within all boundaries.

Optional method 5: A version field and a flags field are changed in a spco box, so that a motion vector in a sub-picture bitstream is constrained, and therefore, a prediction reference pixel does not exceed a boundary of a picture. The version field is used to indicate that there is a boundary, of a sub-picture, at which a motion vector is constrained, and the flags uses four bits to indicate a specific boundary, of the sub-picture, at which the motion vector is constrained. Syntax added in the spco box is as follows:

```
          aligned(8) class SubPictureCompositionBox extends
 TrackGroupTypeBox('spco', version = 1, flags) {
          unsigned int(16) track_x;
          unsigned int(16) track_y;
          unsigned int(16) track_width;
          unsigned int(16) track_height;
          unsigned int(16) composition_width;
          unsigned int(16) composition_height;
          }
```

In the foregoing syntax expression, semantics of the version and the flags are as follows:
The version is an integer and indicates a version of the current box (that a value of the version is 1 indicates that a motion vector, in a bitstream of a sub-picture in a current track, is constrained within a boundary).

The flags is a 24-bit integer used to save an indicator and defines the following values:
motion_constrained_left indicates that a motion vector used for prediction is constrained within a left boundary of the sub-picture, and a prediction pixel does not exceed the left boundary of the sub-picture to make reference. A value of the indicator is 0x000001.
motion_constrained_right indicates that a motion vector used for prediction is constrained within a right boundary of the sub-picture, and a prediction pixel does not exceed the right boundary of the sub-picture to make reference. A value of the indicator is 0x000002.
motion_constrained_top indicates that a motion vector used for prediction is constrained within a top boundary of the sub-picture, and a prediction pixel does not exceed the top boundary of the sub-picture to make reference. A value of the indicator is 0x000004.
motion_constrained_bottom indicates that a motion vector used for prediction is constrained within a bottom boundary of the sub-picture, and a prediction pixel does not exceed the bottom boundary of the sub-picture to make reference. A value of the indicator is 0x000008.

In another optional manner, a new track_group_type 'mctd' is defined in TrackGroupTypeBox in an OMAF file format, to indicate that a current track belongs to a group of tracks in which a motion vector is constrained. Bitstreams in the group of tracks may be spliced, to obtain a new bitstream, so that a location of a sub-picture obtained after the bitstream is decoded may be different from a location in an original picture.

'mctd' is defined as follows:

```
          aligned(8) class MotionConstrainedBox extends
 TrackGroupTypeBox('mctd') {
          unsigned int(1) motion_constrained_left;
          unsigned int(1) motion_constrained_right;
          unsigned int(1) motion_constrained_top;
          unsigned int(1) motion_constrained_bottom;
          bit(4) reserved=0;
          }
```

Semantics are as follows:
motion_constrained_left is used to indicate whether a motion vector used for prediction is constrained within a left boundary of the sub-picture. In an example, that a value of motion_constrained_left is 1 indicates that the motion vector used for prediction is constrained within the left boundary of the sub-picture, and a prediction pixel does not exceed the left boundary of the sub-picture to make reference. That a value of motion_constrained_left is 0 indicates that the motion vector used for prediction is not constrained within the left boundary of the sub-picture.
motion_constrained_right is used to indicate whether a motion vector used for prediction is constrained within a right boundary of the sub-picture. In an example, that a value of motion_constrained_right is 1 indicates that the motion vector used for prediction is constrained within the right boundary of the sub-picture, and a prediction pixel does not exceed the right boundary of the sub-picture to make reference. That a value of motion_constrained_left is 0 indicates that the motion vector used for prediction is not constrained within the left boundary of the sub-picture.
motion_constrained_top is used to indicate whether a motion vector used for prediction is constrained within a top boundary of the sub-picture. In an example, that a value of motion_constrained_top is 1 indicates that the motion vector used for prediction is constrained within the top boundary of the sub-picture, and a prediction pixel does not exceed the top boundary of the sub-picture to make reference. That a value of motion_constrained_left is 0 indicates that the motion vector used for prediction is not constrained within the left boundary of the sub-picture.
motion_constrained_bottom is used to indicate whether a motion vector used for prediction is constrained within a bottom boundary of the sub-picture. In an example, that a value of motion_constrained_bottom is 1 indicates that the motion vector used for prediction is constrained within the bottom boundary of the sub-picture, and a prediction pixel does not exceed the bottom boundary of the sub-picture to make reference. That a value of motion_constrained_left is 0 indicates that the motion vector used for prediction is not constrained within the left boundary of the sub-picture.

Optionally, 'mctd' may alternatively be defined as follows:

```
          aligned(8) class MotionConstrainedBox extends
 TrackGroupTypeBox('mctd') {
          unsigned int(16) track_x;
          unsigned int(16) track_y;
          unsigned int(16) track_width;
          unsigned int(16) track_height;
          unsigned int(16) composition_width;
          unsigned int(16) composition_height;
          }
```

In other words, only a new track_group_type 'mctd' is added to TrackGroupTypeBox, and the box indicates that a motion vector in a sub-picture bitstream in the track is constrained, so that a prediction reference pixel does not exceed a boundary of the picture.

Optionally, 'mctd' may alternatively be defined as follows:

```
          aligned(8) class MotionConstrainedBox extends
 TrackGroupTypeBox('mctd', version = 0, flags) {
          unsigned int(16) track_x;
          unsigned int(16) track_y;
          unsigned int(16) track_width;
          unsigned int(16) track_height;
          unsigned int(16) composition_width;
          unsigned int(16) composition_height;
          }
```

That a new track_group_type 'mctd' is defined indicates that a motion vector in a sub-picture bitstream in the current track is constrained. The flags is a 24-bit integer used to save an indicator, and defines the following values:
motion_constrained_left indicates that a motion vector used for prediction is constrained within a left boundary of the sub-picture, and a prediction pixel does not exceed the left boundary of the sub-picture to make reference. A value of the indicator may be 0x000001.
motion_constrained_right indicates that a motion vector used for prediction is constrained within a right boundary of the sub-picture, and a prediction pixel does not exceed the right boundary of the sub-picture to make reference. A value of the indicator may be 0x000002.
motion_constrained_top indicates that a motion vector used for prediction is constrained within a top boundary of the sub-picture, and a prediction pixel does not exceed the top boundary of the sub-picture to make reference. A value of the indicator may be 0x000004.
motion_constrained_bottom indicates that a motion vector used for prediction is constrained within a bottom boundary of the sub-picture, and a prediction pixel does not exceed the bottom boundary of the sub-picture to make reference. A value of the indicator may be 0x000008.

In another possible manner of this embodiment of the present invention, a MotionConstraintInfoBox is newly added to SubPictureCompositionBox in the OMAF file format.

An example of MotionConstraintInfoBox is as follows:

```
          aligned(8) class SubPictureCompositionBox extends
 TrackGroupTypeBox('spco') {
          SubPictureRegionBox();
          MotionConstraintInfoBox();
          // optional boxes
          }
          aligned(8) class SubPictureRegionBox extends FullBox('sprg',0,0) {
          unsigned int(16) track_x;
          unsigned int(16) track_y;
          unsigned int(16) track_width;
          unsigned int(16) track_height;
          unsigned int(16) composition_width;
          unsigned int(16) composition_height;
          }
          aligned(8) class MotionConstraintInfoBox extends
 FullBox('mcif,0,0){unsigned int(1) motion_constrained_left;
          unsigned int(1) motion_constrained_right;
          unsigned int(1) motion_constrained_top;
          unsigned int(1) motion_constrained_bottom;
          bit(4) reserved=0;
          }
```

Semantics are as follows:
Motion_constrained_left equal to 1 indicates that the left side of sub-picture is motion constrained, 0 indicates that the left side of sub-picture is not motion constrained.
Motion_constrained_right equal to 1 indicates that the right side of sub-picture is motion constrained, 0 indicates that the right side of sub-picture is not motion constrained.
Motion_constrained_top equal to 1 indicates that the top side of sub-picture is motion constrained, 0 indicates that the top side of sub-picture is not motion constrained.
Motion_constrained_bottom equal to 1 indicates that the bottom side of sub-picture is motion constrained, 0 indicates that the bottom side of sub-picture is not motion constrained.
motion_constrained_left is used to indicate whether a motion vector used for prediction is constrained within a left boundary of the sub-picture. In an example, that a value of motion_constrained_left is 1 indicates that the motion vector used for prediction is constrained within the left boundary of the sub-picture, and a prediction pixel does not exceed the left boundary of the sub-picture to make reference. That a value of motion_constrained_left is 0 indicates that the motion vector used for prediction is not constrained within the left boundary of the sub-picture.
motion_constrained_right is used to indicate whether a motion vector used for prediction is constrained within a right boundary of the sub-picture. In an example, that a value of motion_constrained_right is 1 indicates that the motion vector used for prediction is constrained within the right boundary of the sub-picture, and a prediction pixel does not exceed the right boundary of the sub-picture to make reference. That a value of motion_constrained_left is 0 indicates that the motion vector used for prediction is not constrained within the left boundary of the sub-picture.
motion_constrained_top is used to indicate whether a motion vector used for prediction is constrained within a top boundary of the sub-picture. In an example, that a value of motion_constrained_top is 1 indicates that the motion vector used for prediction is constrained within the top boundary of the sub-picture, and a prediction pixel does not exceed the top boundary of the sub-picture to make reference. That a value of motion_constrained_left is 0 indicates that the motion vector used for prediction is not constrained within the left boundary of the sub-picture.
motion_constrained_bottom is used to indicate whether a motion vector used for prediction is constrained within a bottom boundary of the sub-picture. In an example, that a value of motion_constrained_bottom is 1 indicates that the motion vector used for prediction is constrained within the bottom boundary of the sub-picture, and a prediction pixel does not exceed the bottom boundary of the sub-picture to make reference. That a value of motion_constrained_left is 0 indicates that the motion vector used for prediction is not constrained within the left boundary of the sub-picture.

It may be understood that, in some possible implementations, MotionConstraintInfoBox may alternatively be located at another location in the OMAF file format. For syntactic elements in MotionConstraintInfoBox, refer to the examples in the foregoing embodiments, for example, the example in the spco box, or the example of the syntactic elements in mctd.

In another optional manner, a new box 'mctd' is defined in Scheme Information Box ('schi') in the OMAF file format, to indicate that the current track belongs to a group of tracks in which a motion vector is constrained. Bitstreams in the group of tracks may be spliced, to obtain a new bitstream, so that a location of a sub-picture obtained after the bitstream is decoded may be different from a location in an original picture.

'mctd' is defined as follows:

```
          aligned(8) class MotionConstrainedBox extends FullBox('mctd',0,0){
          unsigned int(1) motion_constrained_left;
          unsigned int(1) motion_constrained_right;
          unsigned int(1) motion_constrained_top;
          unsigned int(1) motion_constrained_bottom;
          bit(4) reserved=0;
          }
```

Semantics are as follows:
motion_constrained_left is used to indicate whether a motion vector used for prediction is constrained within a left boundary of the sub-picture. In an example, that a value of motion_constrained_left is 1 indicates that the motion vector used for prediction is constrained within the left boundary of the sub-picture, and a prediction pixel does not exceed the left boundary of the sub-picture to make reference. That a value of motion_constrained_left is 0 indicates that the motion vector used for prediction is not constrained within the left boundary of the sub-picture.
motion_constrained_right is used to indicate whether a motion vector used for prediction is constrained within a right boundary of the sub-picture. In an example, that a value of motion_constrained_right is 1 indicates that the motion vector used for prediction is constrained within the right boundary of the sub-picture, and a prediction pixel does not exceed the right boundary of the sub-picture to make reference. That a value of motion_constrained_left is 0 indicates that the motion vector used for prediction is not constrained within the left boundary of the sub-picture.
motion_constrained_top is used to indicate whether a motion vector used for prediction is constrained within a top boundary of the sub-picture. In an example, that a value of motion_constrained_top is 1 indicates that the motion vector used for prediction is constrained within the top boundary of the sub-picture, and a prediction pixel does not exceed the top boundary of the sub-picture to make reference. That a value of motion_constrained_left is 0 indicates that the motion vector used for prediction is not constrained within the left boundary of the sub-picture.
motion_constrained_bottom is used to indicate whether a motion vector used for prediction is constrained within a bottom boundary of the sub-picture. In an example, that a value of motion_constrained_bottom is 1 indicates that the motion vector used for prediction is constrained within the bottom boundary of the sub-picture, and a prediction pixel does not exceed the bottom boundary of the sub-picture to make reference. That a value of motion_constrained_left is 0 indicates that the motion vector used for prediction is not constrained within the left boundary of the sub-picture.

In an optional manner of this embodiment of the present invention, a manner of describing, in a file format specified in the ISOBMFF, a predictive motion vector constraint of a sub-picture bitstream is added to this embodiment. In the file format, for a sub-picture bitstream motion vector constraint encoding scheme, Sample Entry Type 'mcsp' is added to a track of a sub-picture. When sample entry name is 'mcsp', it indicates that a bitstream in a track of a current track is motion-vector-constrained, and a motion vector does not exceed any boundary of the picture to perform prediction pixel reference.

In an optional manner of this embodiment of the present invention, this embodiment provides a manner of describing, in an MPD, a predictive motion vector constraint of a sub-picture bitstream.

On an encoder side, an example of describing a motion vector in a sub-picture in an MPD file is as follows:

```
<?xml version="1.0" encoding="UTF-8"?>
          <MPD
            xmlns="urn:mpeg:dash:schema:mpd:2011"
            type="static"
            mediaPresentationDuration="PT10S"
            minBufferTime="PT1S"
            profiles="urn:mpeg:dash:profile:isoff-on-demand:2011">
            <Period>
              <AdaptationSet segmentAlignment="true"
 subsegmentAlignment="true" subsegmentStartsWithSAP="1" >
                <EssentialProperty schemeIdUri="urn:mpeg:dash:mcsp:2014"
 value="0,0,0,0"/>
                <Representation mimeType="video/mp4" codecs="mcc"
 width="640" height="640" bandwidth="79707" startWithSAP="1">
                          <BaseURL> src.mp4</BaseURL>
                    <SegmentBase indexRangeExact="true" indexRange="837-
 988"/>
                      </Representation>
                    </AdaptationSet>
          ...
                   </Period>
          </MPD>
```

In this example, a new EssentialProperty attribute Mcsp @value is specified, and information about whether a motion vector in a picture bitstream exceeds a boundary is expressed. Descriptions of the Tile@value attribute are shown in Table 4. When a client requests video content, the client obtains, by parsing the element, information about whether the motion vector in the sub-picture bitstream exceeds a boundary.

**Table 4 Mcsp@value attribute description in "urn:mpeg:dash:mcsp:2014"**

| Mcsp@ value | Description |
|---|---|
| motion_constrained_left | specifies whether motion vector is constrained within left boundary of the picture |
| motion_constrained_right | specifies whether motion vector is constrained within right boundary of the picture |
| motion_constrained_top | specifies whether motion vector is constrained within top boundary of the picture |
| motion_constrained_left | specifies whether motion vector is constrained within bottom boundary of the picture |

Semantics of the syntactic elements are as follows:
motion_constrained_left is used to indicate whether a motion vector used for prediction is constrained within a left boundary of the sub-picture. In an example, that a value of motion_constrained_left is 1 indicates that the motion vector used for prediction is constrained within the left boundary of the sub-picture, and a prediction pixel does not exceed the left boundary of the sub-picture to make reference. That a value of motion_constrained_left is 0 indicates that the motion vector used for prediction is not constrained within the left boundary of the sub-picture.
motion_constrained_right is used to indicate whether a motion vector used for prediction is constrained within a right boundary of the sub-picture. In an example, that a value of motion_constrained_right is 1 indicates that the motion vector used for prediction is constrained within the right boundary of the sub-picture, and a prediction pixel does not exceed the right boundary of the sub-picture to make reference. That a value of motion_constrained_left is 0 indicates that the motion vector used for prediction is not constrained within the left boundary of the sub-picture.
motion_constrained_top is used to indicate whether a motion vector used for prediction is constrained within a top boundary of the sub-picture. In an example, that a value of motion_constrained_top is 1 indicates that the motion vector used for prediction is constrained within the top boundary of the sub-picture, and a prediction pixel does not exceed the top boundary of the sub-picture to make reference. That a value of motion_constrained_left is 0 indicates that the motion vector used for prediction is not constrained within the left boundary of the sub-picture.
motion_constrained_bottom is used to indicate whether a motion vector used for prediction is constrained within a bottom boundary of the sub-picture. In an example, that a value of motion_constrained_bottom is 1 indicates that the motion vector used for prediction is constrained within the bottom boundary of the sub-picture, and a prediction pixel does not exceed the bottom boundary of the sub-picture to make reference. That a value of motion_constrained_left is 0 indicates that the motion vector used for prediction is not constrained within the left boundary of the sub-picture.

In addition, in a representation field of the MPD file, information about a predictive motion vector constraint of a sub-picture bitstream may alternatively be added. In this example, a value "mcc" of a codecs field is added. After a decoder side obtains the information, it indicates that a predictive motion vector of a current sub-picture bitstream is constrained, and a prediction pixel does not exceed one or more boundaries of a sub-picture to make reference.

In another possible implementation of this embodiment of the present invention, this embodiment discloses a server apparatus. The server is a server that generates the information, in the application, about whether a predictive motion vector in a sub-bitstream exceeds a boundary. The information is written into an SEI of the bitstream, or is written into a file in a manner described in the application, or the like. The server may not be responsible for original bitstream encoding, for example, the server may be a transcoding server, or a server that only generates the information, and is configured to store a bitstream or a file that carries the information described in the application.

In the solutions in the embodiments of the present invention, the information about whether the bitstream can be spliced is added to the SEI message of the bitstream or the OMAF file format, so that it is possible to splice a group of sub-bitstreams and then decode the bitstream after splicing. Bitstream splicing processing enables a plurality of sub-bitstreams to be decoded by using only a single decoder in one decoding operation after the plurality of sub-bitstreams are spliced, so that decoder resources are saved. Moreover, allowing the predictive motion vector exceeds the picture boundary to make pixel reference also improves some coding performance.

FIG. 11 is a schematic diagram of a hardware structure of a computer device 110 according to an embodiment of the present invention. As shown in FIG. 11, the computer device 110 may be used as an implementation of a streaming media information processing apparatus or an implementation of a streaming media information processing method. The computer device 110 includes a processor 111, a memory 112, an input/output interface 113, and a bus 115, and may further include a communications interface 114. The processor 111, the memory 112, the input/output interface 113, and the communications interface 114 implement a mutual communication connection by using the bus 115.

The processor 111 may use a general-purpose central processing unit (Central Processing Unit, CPU), a microprocessor, an application-specific integrated circuit (Application Specific Integrated Circuit, ASIC), or one or more integrated circuits. The processor 111 is configured to execute a related program, to implement a function that needs to be performed by a module in the streaming media information processing apparatus provided in the embodiments of the present invention, or perform the streaming media information processing method corresponding to the method embodiments of the present invention. The processor 111 may be an integrated circuit chip and has a signal processing capability. In an implementation process, steps in the foregoing method can be implemented by using a hardware integrated logical circuit in the processor 111, or by using instructions in a form of software. The processor 111 may be a general purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in the embodiments of the present invention. The general purpose processor may be a microprocessor, or the processor may be any conventional processor or the like. Steps of the method disclosed with reference to the embodiments of the present invention may be directly executed and accomplished by a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 112. The processor 111 reads information in the memory 112, and performs, with reference to hardware of the processor 111, the function that needs to be performed by the module included in the streaming media information processing apparatus provided in the embodiments of the present invention, or performs the streaming media information processing method provided in the method embodiments of the present invention.

The memory 112 may be a read-only memory (Read-Only Memory, ROM), a static storage device, a dynamic storage device, or a random access memory (Random Access Memory, RAM). The memory 112 may store an operating system and another application program. When the function that needs to be performed by the module included in the streaming media information processing apparatus provided in the embodiments of the present invention is implemented by using software or firmware, or the streaming media information processing method provided in the method embodiments of the present invention is performed, program code used to implement the technical solutions provided in the embodiments of the present invention is stored in the memory 112, and the processor 111 performs an operation that needs to be performed by the module included in the streaming media information processing apparatus, or performs the media data processing method provided in the method embodiments of present invention.

The input/output interface 113 is configured to receive input data and information, and output data such as an operation result.

The communications interface 114 uses a transceiver apparatus, for example, but not limited to, a transceiver, to implement communication between the computer device 110 and another device or a communications network. The communications interface 114 may be used as an obtaining module or a sending module in a processing apparatus.

The bus 115 may include a channel for transferring information between components (such as the processor 111, the memory 112, the input/output interface 113, and the communications interface 114) of the computer device 110.

It should be noted that, although only the processor 111, the memory 112, the input/output interface 113, the communications interface 114, and the bus 115 of the computer device 110 in FIG. 11 are shown, in a specific implementation process, a person skilled in the art should understand that the computer device 110 further includes another component required for normal operation, for example, a display configured to display to-be-played video data. In addition, according to a specific requirement, a person skilled in the art should understand that computer device 110 may further include hardware components for implementing other additional functions. In addition, a person skilled in the art should understand that the computer device 110 may include only components essential for implementing this embodiment of the present invention, but not necessarily include all the components shown in FIG. 11.

It should be noted that, to make the description brief, the foregoing method embodiments are expressed as a series of actions. However, a person skilled in the art should understand that the present invention is not limited to the described action sequence, because according to the present invention, some steps may be performed in other sequences or performed simultaneously. In addition, a person skilled in the art should also understand that all the embodiments described in the specification are preferred embodiments, and the related actions and modules are not necessarily mandatory to the present invention. A person of ordinary skill in the art may understand that all or some of the processes of the methods in the embodiments may be implemented by a computer program instructing relevant hardware. The program may be stored in a computer-readable storage medium. When the program is run, the processes of the methods in the embodiments are performed. The foregoing storage medium may be a magnetic disk, an optical disc, a read-only memory (ROM: Read-Only Memory), or a random access memory (RAM: Random Access Memory).

Although the present invention is described with reference to the embodiments, in a process of implementing the present invention that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of a plurality of. A single processor or another unit may implement several functions enumerated in the claims. Some measures are recorded in dependent claims that are different from each other, but this does not mean that these measures cannot be combined to produce a better effect. A computer program may be stored/distributed in an appropriate medium such as an optical storage medium or a solid-state medium and be provided together with other hardware or be used as a part of hardware, or may be distributed in another manner, for example, by using the Internet, or another wired or wireless telecommunications system.

## Claims

1. A media information processing method, wherein the method comprises:
obtaining media data, wherein the media data comprises indication information and at least one frame of picture data, the indication information is used to indicate whether a prediction pixel corresponding to a pixel in a picture exceeds a boundary in a preset direction, and
the preset direction comprises at least one of the following directions:
a top direction, a bottom direction, a left direction, or a right direction; and
decoding the at least one frame of picture data based on the indication information.

2. The media information processing method according to claim 1, wherein the indication information comprises at least one identifier, and the identifier has a one-to-one correspondence with the preset direction.

3. The media information processing method according to claim 1 or 2, wherein the picture data is picture data obtained after the picture is encoded by using the ITU H.264, and supplemental enhancement information (supplementary enhancement information, SEI) of the media data comprises the indication information.

4. The media information processing method according to claim 1 or 2, wherein the picture data is picture data obtained after the picture is encoded by using the ITU H.265, and supplemental enhancement information (supplementary enhancement information, SEI) of the media data comprises the indication information.

5. The media information processing method according to claim 1 or 2, wherein the picture data is encapsulated in a track (track), and a box (box) of the track comprises the indication information.

6. The media information processing method according to any one of claims 1 to 4, wherein the media data comprises a media presentation description (Media presentation description, MPD) file, and the media presentation description file comprises the indication information.

7. A media information processing apparatus, wherein the apparatus comprises:
a receiving module, configured to obtain media data, wherein the media data comprises indication information and at least one frame of picture data, the indication information is used to indicate whether a prediction pixel corresponding to a pixel in a picture exceeds a boundary in a preset direction, and
the preset direction comprises at least one of the following directions:
a top direction, a bottom direction, a left direction, or a right direction; and
a processing module, configured to decode the at least one frame of picture data based on the indication information.

8. The media information processing apparatus according to claim 6, wherein the indication information comprises at least one identifier, and the identifier has a one-to-one correspondence with the preset direction.

9. The media information processing apparatus according to claim 6 or 7, wherein the picture data is picture data obtained after the picture is encoded by using the ITU H.264, and supplemental enhancement information (supplementary enhancement information, SEI) of the media data comprises the indication information.

10. The media information processing apparatus according to claim 6 or 7, wherein the picture data is picture data obtained after the picture is encoded by using the ITU H.265, and supplemental enhancement information (supplementary enhancement information, SEI) of the media data comprises the indication information.

11. The media information processing apparatus according to claim 6 or 7, wherein the picture data is encapsulated in a track (track), and a box (box) of the track comprises the indication information.

12. The media information processing apparatus according to any one of claims 7 to 11, wherein the media data comprises a media presentation description (Media presentation description, MPD) file, and the media presentation description file comprises the indication information.
